# FASCICULE DE BREVET EUROPEEN

(11) **EP 1 242 765 B1**
(45) Date de publication et mention de la délivrance du brevet: **21.07.2004**
(21) Numéro de dépôt: 00981443.5
(22) Date de dépôt: 20.11.2000
(51) Int. Cl.: F16L 11/08, F16L 9/12

(54) **CONDUITE FLEXIBLE SOUS-MARINE DE GRANDE LONGUEUR A STRUCTURE EVOLUTIVE**
BIEGSAME UNTERSEELEITUNG GROSSER LÄNGE UND WECHSELNDER STRUKTUR
FLEXIBLE LONG-LENGTH SUBMARINE PIPELINE WITH AN EXPANDABLE STRUCTURE

(30) Priorité: 17.12.1999 FR 9915968
(43) Date de publication de la demande: 25.09.2002
(73) Titulaire: TECHNIP FRANCE, 92400 Courbevoie (FR)
(72) Inventeur: ESPINASSE, Philippe, François, F-76420 Bihorel (FR)
(74) Mandataire: Bertrand, Didier
(86) Numéro de dépôt international: PCT/FR2000/003218
(87) Numéro de publication internationale: WO 2001/044706

(56) Documents cités:
- FR-A- 2 664 019
- US-A- 4 854 781
- US-A- 5 275 209

## Description

La présente invention concerne une conduite flexible pour véhiculer sur de grandes distances un fluide sous pression et le cas échéant sous haute température, tel qu'un gaz, du pétrole, de l'eau ou d'autres fluides. L'invention vise tout particulièrement une conduite destinée à une exploitation pétrolière en mer. Elle vise notamment : d'une part les conduites de fond, dites "flow-lines", c'est-à-dire des conduites flexibles déroulées à partir d'un bateau pour être posées généralement sur le fond de la mer et connectées aux installations sous-marines, de telles conduites travaillant principalement en statique ; et plus particulièrement, d'autre part, les colonnes montantes, dites "risers", c'est-à-dire des conduites flexibles déroulées à partir d'une installation de surface telle qu'une plate-forme et qui sont connectées aux installations sous-marines et dont la majeure partie ne repose pas sous le fond marin, de telles conduites travaillant essentiellement en dynamique.

Les conduites flexibles utilisées en mer doivent pouvoir résister à des pressions internes et/ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les normes API 17 B et API 17 J établies par l'American Petroleum Institute sous l'intitulé "Recommended Practice for Flexible Pipe.

De telles conduites fabriquées en grandes longueurs (voir, par exemple, FR-A-2 664 019) comprennent de l'intérieur vers l'extérieur au moins certaines des couches coaxiales suivantes :
- une carcasse constituée d'un feuillard agrafé, qui sert à empêcher l'écrasement sous pression ;
- une gaine d'étanchéité interne réalisée en matière plastique, généralement polymère, résistant plus ou moins à l'action chimique du fluide à transporter ;
- une voûte de pression résistant à la pression externe mais principalement à la pression développée par le fluide (pression interne) dans la gaine d'étanchéité et qui se traduit par des efforts circonférentiels sur la voûte de pression ; la voûte de pression comprend un enroulement en hélice à pas court (c'est-à-dire avec un angle d'enroulement par rapport à l'axe de la conduite compris entre 75° et sensiblement 90°) autour de la gaine interne, d'un ou plusieurs fils métalliques de forme agrafés (auto-agrafables ou non) ; ces fils de forme sont typiquement des fils de forme de section en T, U et Z et leurs variantes, connues sous le nom de « téta » et « zêta » ;
- le cas échéant une frette constituée d'un fil métallique enroulé à pas court, sans agrafage, et destiné à augmenter la résistance de la voûte à la pression interne ; il s'agit généralement d'un fil plat à section rectangulaire ;
- au moins une nappe (et généralement au moins deux nappes croisées) d'armures de traction dont l'angle d'armage mesuré sur l'axe longitudinal de la conduite est d'environ 55° ou inférieur ; et
- le cas échéant au moins une couche d'isolation thermique ;
- une gaine de protection et d'étanchéité externe en polymère.

La fabrication d'une telle conduite flexible standard se fait couche par couche, de manière séquentielle avec stockage intermédiaire. Ainsi le feuillard agrafé qui sert de noyau est-il fabriqué en un seul lancement sur une spiraleuse/profileuse, avec un seul réglage machine et une seule matière, puis stocké sur une bobine. Ce noyau est ensuite gainé sur une ligne d'extrusion où, de même, ne lui est appliqué qu'une matière avec un réglage donné et il est de nouveau stocké sur bobine. Les phases de pose de voûte(s) de pression, d'armure(s), de gaines intermédiaires, d'isolation thermique et de gaine externe sont exécutées suivant le même principe.

Les conduites flexibles de liaison fond/surface sont soumises à des critères variables de charge de travail, principalement fonction, le long de leur abscisse curviligne, de la longueur suspendue, de la profondeur d'eau locale et des conditions au sein de l'océan, notamment pour les applications en mer profonde.

Jusqu'à présent, on a eu l'habitude de concevoir pour les flexibles une structure pour laquelle chaque couche était dimensionnée pour la contrainte maximale prévisionnelle sur toute la longueur du flexible, confirmée à travers un calcul itératif pour prendre en compte l'effet des couches adjacentes. Chaque couche peut donc se retrouver très surdimensionnée dans certaines zones. Ceci a pour inconvénient d'augmenter la masse du flexible, augmentant le dimensionnement des équipements d'installation, des moyens de manutention et donc le coût global du projet. Dans certains cas, l'augmentation de la masse de la conduite et de la traînée peut conduire à augmenter la contrainte dans certaines couches et nécessiter un renforcement desdites couches, d'où une nouvelle augmentation de masse. Ceci peut également être préjudiciable au support de surface final, en limitant sa capacité de charge et nécessitant des renforts structurels supplémentaires et donc augmentant son coût.

Alternativement, on a utilisé non plus une structure mais deux structures (ou plus) différentes, liées par une ou plusieurs connexions intermédiaires, chacune de ces structures étant adaptée à son environnement. Ceci a pour inconvénient de réclamer des embouts intermédiaires coûteux, nécessitant le rajout de raidisseurs pour éviter des concentrations de moments de flexion en utilisation dynamique. Cette connexion doit être positionnée dans une zone de faible variation d'efforts dynamiques. Une connexion intermédiaire est un risque supplémentaire de fuite et requiert de plus une procédure spécifique pour ne pas l'endommager lors de l'installation. Bien entendu, le coût et les risques d'installation sont augmentés.

L'invention a pour but de proposer une nouvelle solution alternative exempte des inconvénients précédents.

Le but de l'invention est atteint dans le cadre d'une conduite telle que définie plus haut par le fait que les caractéristiques physiques d'au moins l'une des couches de la conduite sont modifiées à la fabrication sur au moins un tronçon de la longueur de la conduite par rapport à un tronçon adjacent, sans embout intermédiaire et , avantageusement, sans modification substantielle du diamètre extérieur de ladite couche. On optimise ainsi la structure de la conduite flexible pour que chaque couche dans chaque zone soit adaptée aux contraintes subies sans surcharger le reste de la structure, tout en restant compatible avec les contraintes liées à la fabrication et aux machines de production. On peut modifier selon le but recherché une ou plusieurs couches, et les modifications peuvent se faire de plusieurs manières, par changement de matière, changement de forme, changement de traitement, etc.

Dans un premier mode de réalisation, la couche modifiée est la carcasse. Pour modifier les caractéristiques physiques de la carcasse, on peut soit changer son inertie en changeant l'épaisseur du feuillard ou la forme d'agrafage (onde plus ou moins haute), soit ses caractéristiques mécaniques en changeant le matériau, le traitement (taux d'écrouissage).

Dans un second mode de réalisation, la couche modifiée est la voûte. Pour modifier les caractéristiques physiques de la voûte, on peut comme pour la carcasse modifier son inertie en changeant l'épaisseur du fil en gardant la même forme de fil ou non, soit ses caractéristiques mécaniques en changeant les caractéristiques mécaniques de l'acier (par traitement thermique, écrouissage, etc.). L'espace annulaire créé en passant d'un fil à forte inertie à un fil à plus faible inertie doit être complété par des moyens de bourrage de façon à garder un diamètre constant. Les moyens de bourrage peuvent être soit un jonc en matière plastique, soit une ou plusieurs nappes d'armures, l'objectif étant d'avoir le même diamètre extérieur en passant d'une section à l'autre (c'est-à-dire en passant du fil à forte inertie au fil à plus faible inertie + moyens de bourrage) de façon à pouvoir fabriquer la couche suivante. Les modifications se font à pas constant ; la largeur des différents fils de forme utilisés est donc identique.

Dans un troisième mode de réalisation, la couche modifiée est la frette. Pour modifier les caractéristiques physiques de la frette, on peut modifier son inertie en changeant son épaisseur ou changer les caractéristiques mécaniques de l'acier (par traitement thermique, écrouissage, etc.). L'espace annulaire créé par un changement d'épaisseur peut être comblé par les mêmes moyens que ceux qui ont été décrits pour la voûte.

Dans un quatrième mode de réalisation, la couche modifiée est la couche d'armures. Pour modifier les caractéristiques physiques de cette couche, on peut modifier son inertie en changeant son épaisseur (en prévoyant des moyens de bourrage d'annulaire), ou changer les caractéristiques mécaniques de l'acier (par traitement thermique, écrouissage, etc.), ou encore en modifiant les performances mécaniques de la couche en remplaçant certains fils d'armures par des fils de bourrage tout en conservant l'organisation de la couche.

Dans un cinquième mode de réalisation, la couche modifiée est la couche d'isolation thermique. Pour modifier les caractéristiques physiques de la couche d'isolation thermique, on peut changer les performances thermiques en choisissant un matériau résistant à la pression extérieure locale ou diminuant le nombre de couches d'isolation ou l'épaisseur des couches.

L'invention sera mieux comprise et d'autres avantages et caractéristiques seront mis en évidence à la lecture de la description suivante d'exemples de réalisation de la conduite flexible selon l'invention. On se référera aux dessins annexés sur lesquels :
- la figure 1 est un schéma d'une colonne montante dynamique et des différentes zones qu'on peut y distinguer,
- la figure 2 est une vue en perspective d'une conduite de colonne montante comportant une modification au niveau des armures,
- la figure 3 est une vue en demi-coupe longitudinale d'une conduite montrant une modification de structure au niveau de la carcasse,
- la figure 4 est une vue en demi-coupe longitudinale d'une conduite montrant une modification de structure au niveau de la voûte de pression.

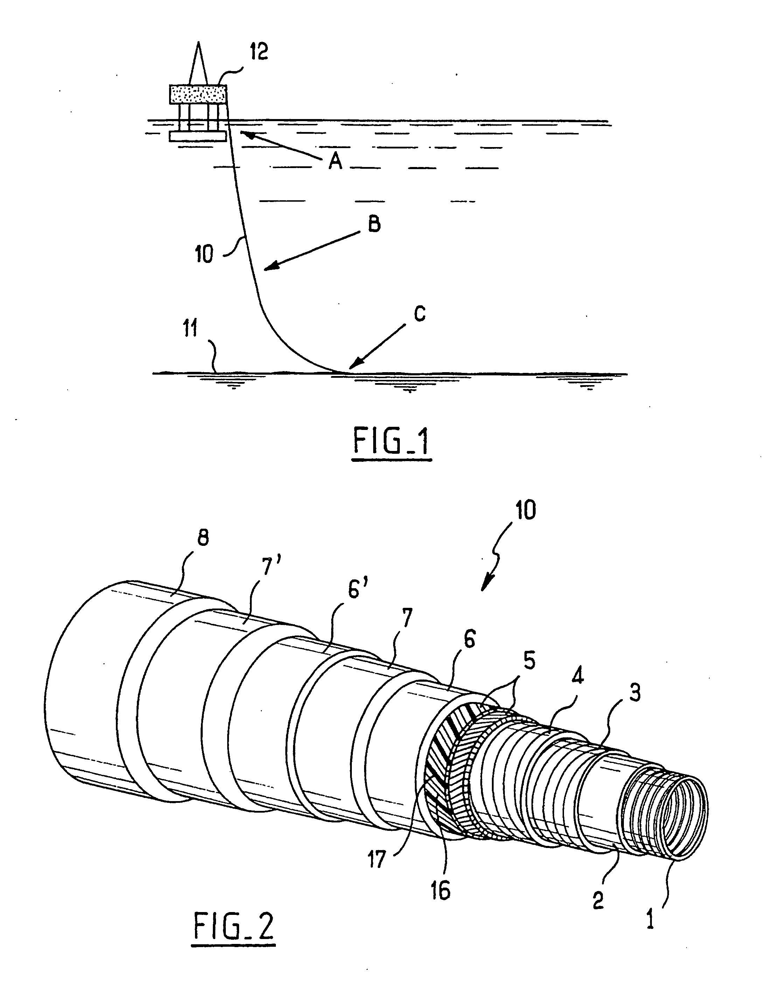

La figure 1 illustre une configuration typique d'un "riser" dynamique 10 dont une partie est sur un fond marin 11 et une autre partie monte jusqu'à une plate-forme 12. On peut distinguer dans cette configuration trois zones assez différenciées sur le plan des contraintes ; une zone A, en tête du "riser", soumise à une forte tension axiale, à une faible pression externe et sujette à la fatigue ; une zone intermédiaire B soumise à une pression hydrostatique croissante, à une tension décroissante et à de faibles variations de courbure, et une zone de fond C soumise à une faible tension axiale, une forte pression hydrostatique et de faibles variations de tension. Dans la zone A, il faut renforcer les caractéristiques mécaniques de la voûte de pression pour tenir compte de la forte différence entre pression interne et externe alors que celle-ci s'atténue au fond de la mer. De même pour les armures, la tension due à la traction et à la pression décroît fortement en descendant vers le fond ainsi que la fatigue induite par les conditions métocéanes. Dans la zone C, le feuillard agrafé interne sera beaucoup plus sollicité pour résister à la pression hydrostatique externe et devra avoir une inertie et/ou des caractéristiques mécaniques plus élevées qu'en surface. Les couches d'isolation thermique devront avoir une résistance à la compression bien plus élevée dans cette zone, ainsi qu'une meilleure résistance à la chaleur, les fluides transportés étant plus chauds.

La figure 2 montre un exemple de couches constitutives de la conduite 10, avec, de l'intérieur vers l'extérieur : une carcasse métallique 1, généralement réalisée par un feuillard agrafé et destinée à la résistance à l'écrasement sous pression externe ; une gaine d'étanchéité interne polymérique 2, une voûte de pression métallique 3, constituée ici de manière traditionnelle par l'enroulement en hélice à pas court (angle d'enroulement généralement voisin de 90° par rapport à l'axe de la conduite) d'un fil métallique de forme agrafé, une couche de frette 4, deux nappes d'armure 5 résistant à la traction axiale dans le sens longitudinal de la conduite et classiquement constituées de deux nappes croisées d'enroulement à pas long (typiquement moins de 55° par rapport à l'axe de la conduite) en sens contraire, deux paires de couches de gaine d'étanchéité intermédiaire 6, 6' et d'isolation thermique 7, 7' et une gaine externe polymérique 8.

Selon l'invention, les caractéristiques physiques de l'une ou l'autre de ces couches peuvent être modifiées lors de la fabrication sans la nécessité d'un embout intermédiaire.

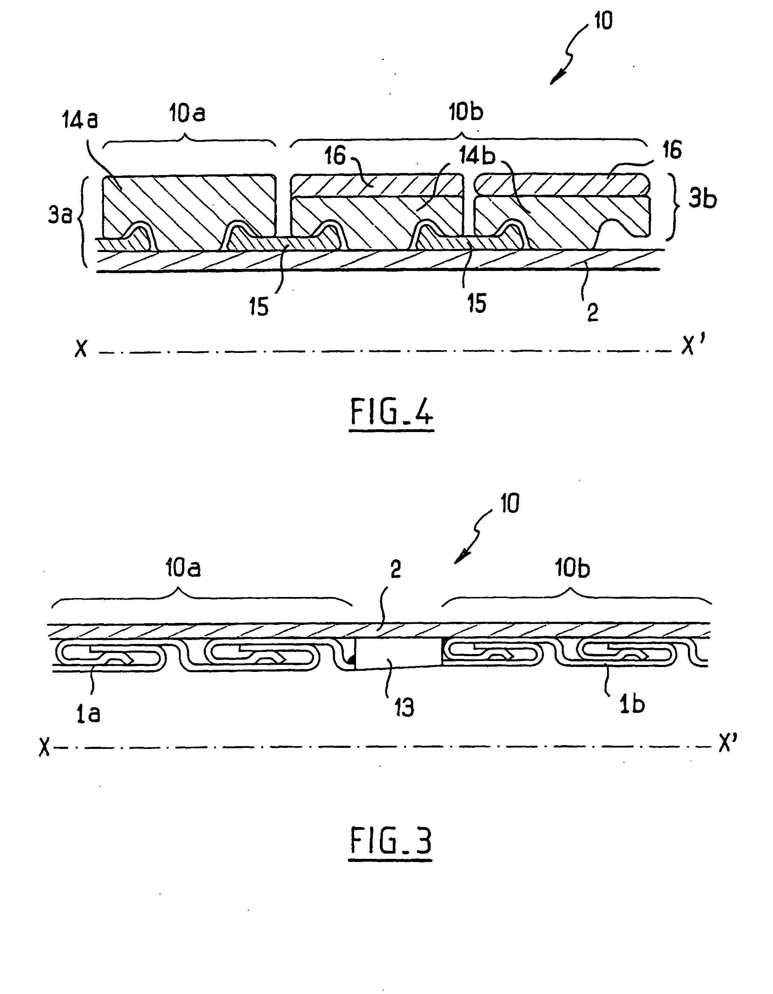

Ainsi la figure 3 illustre une modification de la couche de feuillard 1 entre deux tronçons 10a et 10b de la conduite 10 d'axe xx' destinés à des zones d'utilisation différentes. L'épaisseur du feuillard composant la carcasse la du tronçon 10a est plus importante que celle du feuillard composant la carcasse 1b du tronçon 10b de manière à faire évoluer l'inertie dans la carcasse, tout en conservant un diamètre extérieur de couche non modifié de sorte qu'on peut sans changement appliquer la gaine d'étanchéité 2. Les feuillards formant les couches 1a, 1b sont raccordés par une pièce d'adaptation 13 soudée et/ou assemblée. Naturellement, d'autres caractéristiques physiques que l'épaisseur de feuillard peuvent être modifiées à la fabrication, telles que la forme du pliage (cela permet de modifier l'épaisseur de la carcasse), la nature du feuillard ou les traitements subis (par exemple écrouissage standard ou renforcé), pour obtenir l'effet voulu.

La figure 4 illustre une modification de la voûte de pression 3 constituée par un enroulement de fil de forme en T agrafé par un fil en U. Dans le tronçon 10a de la conduite, le fil de forme 14a agrafé par le fil 15 est plus haut et a une plus forte inertie que le fil 14b du tronçon 10b. Afin de conserver constant le diamètre extérieur de la couche de voûte de pression 3a et 3b, l'écart de hauteur est comblé par des moyens de bourrage 16 enroulés sur le fil à faible inertie 14b. Là encore, on peut selon les cas modifier par d'autres moyens les caractéristiques physiques (comprenant entre autres leurs caractéristiques mécaniques, leur comportement en présence de fluides de corrosion ou leur tenue en fatigue) de la voûte de pression, notamment par modification du procédé d'élaboration (par exemple variation d'un traitement de revenu ou de taux d'écrouissage), ou de la nuance employée.

Les caractéristiques de la couche d'armure peuvent être modifiées de la même manière, par changement du procédé d'élaboration, de la nuance ou même de la matière utilisée. Ainsi, le carbone ou des nuances d'acier inoxydables à hautes caractéristiques mécaniques peuvent être utilisées dans la partie supérieure du "riser" pour des conditions très corrosives et à fortes charges, ou bien un fil en acier trempé revenu. De plus, du fait de leur mode de fonctionnement (reprise d'effort par effet de cabestan), il n'est pas nécessaire de développer des procédures de soudage très performantes pour passer d'un tronçon à un autre.

On peut aussi remplacer certains des fils d'armure métalliques 16 par des fils de bourrage 17 en matière plastique. respectant l'organisation de la couche d'armure. comme représenté dans la figure 2.

De la même façon, il est possible d'adapter les nuances d'isolants thermiques à la température de fonctionnement de la conduite flexible ainsi qu'à la pression hydrostatique externe. Le fait d'avoir un besoin moindre de résistance en compression permet généralement d'utiliser des matériaux avec un coefficient d'isolation nettement plus élevé.

## Revendications

1. Conduite tubulaire flexible sous-marine d'un seul tenant comprenant, de l'intérieur vers l'extérieur, les couches suivantes : le cas échéant une carcasse (1) en feuillard agrafé, une gaine d'étanchéité interne (2) en matière polymère, les cas échéant une voûte de pression (3) constituée d'un enroulement en hélice à pas court d'un élément métallique agrafé disposé au-dessus de la gaine interne (2), le cas échéant une frette (4) constituée d'un fil métallique enroulé sans agrafage à pas court, au moins une nappe (5, 6) d'armures de traction enroulées à pas long, le cas échéant au moins une couche d'isolation thermique (7), et le cas échéant une gaine (8) de protection et d'étanchéité externe en polymère ; la conduite comportant sur sa longueur des tronçons (10a, 10b) soumis à des contraintes internes et externes différentes, **caractérisée en ce que** les caractéristiques physiques d'au moins l'une desdites couches (1-8) sont modifiées à la fabrication sur au moins un tronçon (10a) de la longueur de la conduite par rapport à un tronçon adjacent (10b), sans embout intermédiaire.

2. Conduite selon la revendication 1, **caractérisée en ce que** les caractéristiques physiques de la couche (1-8) sont modifiées sans modification substantielle de son diamètre extérieur.

3. Conduite selon l'une quelconque des revendications 1 ou 2, dans laquelle la couche modifiée est la carcasse (1), **caractérisée en ce que** les modifications sont choisies entre les modifications d'inertie par changement de l'épaisseur ou de la forme d'agrafage du feuillard ou des modifications des caractéristiques mécaniques par changement de la nature du matériau composant le feuillard ou changement du traitement qu'il subit lors de sa fabrication.

4. Conduite selon l'une quelconque des revendications 1 ou 2, dans laquelle la couche modifiée est la voûte de pression (3), **caractérisée en ce que** les modifications sont choisies entre les modifications d'inertie par changement de l'épaisseur du fil ou des modifications des caractéristiques mécaniques de l'acier constituant le fil.

5. Conduite selon l'une quelconque des revendications 1 ou 2, dans laquelle la couche modifiée est la frette (4), **caractérisée en ce que** les modifications sont choisies entre les modifications d'inertie par changement de l'épaisseur de la frette ou des modifications des caractéristiques mécaniques de l'acier constituant la frette.

6. Conduite selon l'une quelconque des revendications 1 ou 2, dans laquelle la couche modifiée est la couche d'armures (5, 6), **caractérisée en ce que** les modifications sont choisies entre les modifications d'inertie par changement de l'épaisseur des nappes d'armures, des modifications des caractéristiques mécaniques de l'acier constituant les armures, ou le remplacement de certains fils d'armures par des fils de bourrage.

7. Conduite selon l'une quelconque des revendications 5 ou 6, dans laquelle la modification est un changement d'épaisseur, **caractérisée par** des moyens de bourrage pour conserver le même diamètre extérieur.

8. Conduite selon l'une quelconque des revendications 1 ou 2, dans laquelle la couche modifiée est la couche d'isolation thermique (7), **caractérisée en ce que** les modifications sont des modifications de performances thermiques.

## Patentansprüche

1. Durchgehend einstückige, flexible Untersee-Rohrleitung, die von innen nach außen die folgenden Lagen aufweist: ggf. eine Karkasse (1) aus verklammertem Band, eine innere Dichtungshülle (2) aus Polymermaterial, ggf. eine Druckschale (3), bestehend aus einer Schraubenwicklung geringer Steigung eines verklammerten Metallelementes, das oberhalb der inneren Hülle (2) angeordnet ist, ggf. eine Bewehrung (4) aus einem unverklammert mit geringer Steigung gewickelten Metalldraht, mindestens eine Schicht (5, 6) von mit großer Steigung gewickelten Zugarmierungen, ggf. mindestens eine Wärmeisolierschicht (7) und ggf. eine äußere Schutz- und Dichtungshülle (8) aus Polymer, wobei die Leitung über ihre Länge Abschnitte (10a, 10b) aufweist, die unterschiedlichen inneren und äußeren Belastungen ausgesetzt sind, **dadurch gekennzeichnet, dass** die physikalischen Eigenschaften mindestens einer der Schichten (1-8) herstellungsseitig auf mindestens einem Längenabschnitt (10a) der Leitung relativ zu einem angrenzenden Abschnitt (10b) modifiziert sind, ohne Einfügung einer Trennstelle.

2. Leitung nach Anspruch 1, **dadurch gekennzeichnet, dass** die physikalischen Eigenschaften der Schicht (1-8) ohne wesentliche Änderung ihres Außendurchmessers modifiziert sind.

3. Leitung nach einem der Ansprüche 1 oder 2, in welcher die modifizierte Schicht die Karkasse (1) ist, **dadurch gekennzeichnet, dass** die Modifikationen ausgewählt sind aus Modifikationen der Verformungsfestigkeit durch Änderung der Dicke oder der Verklammerungsform des Bandes oder Modifikationen der mechanischen Eigenschaften durch Änderung der Beschaffenheit des Materials des Bandes oder Änderung der Behandlung, der es während der Fertigung unterworfen ist.

4. Leitung nach einem der Ansprüche 1 oder 2, bei der die modifizierte Lage die Druckschale (3) ist, **dadurch gekennzeichnet, dass** die Modifikationen ausgewählt sind aus Modifikationen der Verformungsfestigkeit durch Änderung der Dicke des Drahtes oder Modifikationen der mechanischen Eigenschaften des Stahls, aus dem der Draht besteht.

5. Leitung nach einem der Ansprüche 1 oder 2, bei der die modifizierte Lage die Bewehrung (4) ist, **dadurch gekennzeichnet, dass** die Modifikationen ausgewählt sind aus Modifikationen der Verformungsfestigkeit durch Ändern der Dicke der Bewehrung oder Modifikationen der mechanischen Eigenschaften des Stahls, aus dem die Bewehrung besteht.

6. Leitung nach einem der Ansprüche 1 oder 2, bei der die modifizierte Lage die Schicht von Armierungen (5, 6) ist, **dadurch gekennzeichnet, dass** die Modifikationen ausgewählt sind aus Modifikation der Verformungsfestigkeit durch Änderung der Dicke der Armierungslagen, Modifikationen der mechanischen Eigenschaften des Stahls, aus dem die Armierungen bestehen, oder der Austausch von bestimmten Armierungsdrähten durch Fülldrähte.

7. Leitung nach einem der Ansprüche 5 oder 6, bei dem die Modifikation eine Dickenänderung ist, **gekennzeichnet durch** Füllmittel zum Beibehalten des gleichen Außendurchmessers.

8. Leitung nach einem der Ansprüche 1 oder 2, bei der die modifizierte Schicht die Wärmeisolierschicht (7) ist, **dadurch gekennzeichnet, dass** die Modifikationen Modifikationen des thermischen Verhaltens sind.

## Claims

1. One-piece subsea flexible tubular pipe comprising, from the inside outwards, the following layers: optionally a carcass (1) made of interlocked metal strip; an inner sealing sheath (2) made of a polymer material ; optionally a pressure vault (3) consisting of a winding of an interlocked metal element wound in a helix with a short pitch and placed over the inner sheath (2); optionally, a hoop (4) consisting of a metal wire wound, without interlocking, with a short pitch; at least one ply (5) of tensile armor layers wound with a long pitch ; optionally, at least one layer of thermal insulation (7); and optionally an outer protective sealing sheath (8) made of a polymer, the pipe having sections (10a, 10b,...) subjected to different internal and external stresses over its length, **characterized in that** the physical characteristics of at least one of the said layers (1-8) are modified at manufacture over at least one section (10a) of the length of the pipe as compared to an adjacent section (10b), without any intermediate connector.

2. Pipe according to Claim 1, **characterized in that** the physical characteristics of the layer (1-8) are modified without substantially modifying its outside diameter.

3. Pipe according to either of Claims 1 and 2, in which the modified layer is the carcass (1), **characterized in that** the modifications are chosen between modifications in the moment of inertia by changing the thickness or the interlocking shape of the strip or modifications in the mechanical properties by changing the nature of the material of which the strip is composed or changing the treatment that it undergoes during its manufacture.

4. Pipe according to either of Claims 1 and 2, in which the modified layer is the pressure vault (3), **characterized in that** the modifications are chosen between modifications in the moment of inertia by changing the thickness of the wire or modifications in the mechanical properties of the steel of which the wire is made.

5. Pipe according to either of Claims 1 and 2, in which the modified layer is the hoop (4), **characterized in that** the modifications are chosen between modifications in the moment of inertia by changing the thickness of the hoop or modifications in the mechanical properties of the steel of which the hoop is made.

6. Pipe according to either of Claims 1 and 2, in which the modified layer is the armor layer (5-6), **characterized in that** the modifications are chosen between modifications in the moment of inertia by changing the thickness of the plies of armor layers, modifications in the mechanical properties of the steel of which the armor layers are made, or replacement of some of the armor wires with filling wires.

7. Pipe according to any one of Claims 5 or 6, in which the modification is a change in thickness, **characterized by** filling means in order to maintain the same outside diameter.

8. Pipe according to either of Claims 1 and 2, in which the modified layer is the thermal insulation layer (7), **characterized in that** the modifications are modifications in thermal performance.
